# EUROPEAN PATENT SPECIFICATION

(11) **EP 4 345 756 B1**
(45) Date of publication and mention of the grant of the patent: **14.10.2026**
(21) Application number: 22857552.8
(22) Date of filing: 28.07.2022
(51) Int. Cl.: G06T 15/40, G06T 15/50, G06T 19/00

(54) **SPECIAL EFFECT GENERATION METHOD AND APPARATUS, ELECTRONIC DEVICE AND STORAGE MEDIUM**
VERFAHREN UND VORRICHTUNG ZUR ERZEUGUNG VON SPEZIALEFFEKTEN, ELEKTRONISCHE VORRICHTUNG UND SPEICHERMEDIUM
PROCÉDÉ ET APPAREIL DE GÉNÉRATION D'EFFETS SPÉCIAUX, DISPOSITIF ÉLECTRONIQUE ET SUPPORT DE STOCKAGE

(30) Priority: 16.08.2021 CN 202110935926
(43) Date of publication of application: 03.04.2024
(73) Proprietor: Beijing Zitiao Network Technology Co., Ltd., Beijing 100190 (CN)
(72) Inventor: LU, Zhixiong, Beijing 100086 (CN)
(74) Representative: Marks & Clerk LLP
(86) International application number: PCT/CN2022/108558
(87) International publication number: WO 2023/020239

(56) References cited:
- WO-A1-2021/068799
- WO-A1-2021/115623
- CN-A- 106 683 161
- CN-A- 110 536 151
- CN-A- 110 738 737
- CN-A- 110 929 651
- CN-A- 111 833 458
- US-A1- 2015 117 794
- CHAI MENGLEI ET AL: "Dynamic hair manipulation in images and videos", ACM TRANSACTIONS ON GRAPHICS, ACM, NY, US, vol. 32, no. 4, 21 July 2013 (2013-07-21), pages 1 - 8, XP059141375, ISSN: 0730-0301, DOI: 10.1145/2461912.2461990
- BACHER IVAN ET AL: "European Conference on Computer Vision", vol. 12460, 14 September 2020 (2020-09-14), Copenhagen, Denmark, pages 224 - 239, XP093184993, ISSN: 0302-9743, Retrieved from the Internet <URL:https://arxiv.org/pdf/2006.15131> DOI: 10.1007/978-3-030-67667-4_14
- BALAKRISHNAN GUHA ET AL: "Synthesizing Images of Humans in Unseen Poses", 1 June 2018 (2018-06-01), pages 8340 - 8348, XP093185609, Retrieved from the Internet <URL:https://arxiv.org/pdf/1804.07739> DOI: 10.1109/CVPR.2018.00870
- THE CREATIVE CATALYST: "Spark AR Studio - Layers, Segmentation and Emitters", 25 July 2019 (2019-07-25), XP093185309, Retrieved from the Internet <URL:https://www.youtube.com/watch?v=TnWrJoPCfco>
- LI ZHENGQI ET AL: "Learning the Depths of Moving People by Watching Frozen People", 2019 IEEE/CVF CONFERENCE ON COMPUTER VISION AND PATTERN RECOGNITION (CVPR), IEEE, 15 June 2019 (2019-06-15), pages 4516 - 4525, XP033686299, [retrieved on 20200108], DOI: 10.1109/CVPR.2019.00465

## Description

### CROSS-REFERENCE TO RELATED APPLICATIONS

This application claims the priority of Chinese Application for Invention No. 202110935926.X, filed to the Patent Office of the People's Republic of China on Aug. 16, 2021.

### TECHNICAL FIELD

This disclosure relates to the technical field of image processing technology, particularly to a special effect generation method and apparatus, an electronic device, and a storage medium.

### BACKGROUND

With the development of technology, more and more applications (Apps) have entered our daily lives. Some Apps can support special effects for local beautification of an image, such as support a special effect for beautify a sky area in an image into a sky in a cartoon, which is very popular with users.

In related technologies, when an App performs local beautification of an image, it usually first segments a local area from the image and then simply overlays special effect data onto the local area.

CHAI MENGLEI ET AL: "Dynamic hair manipulation in images and videos" (ACM TRANSACTIONS ON GRAPHICS, ACM, NY, US, vol. 32, no. 4, 21 July 2013 (2013-07-21), pages 1-8) presents a single-view hair modeling technique for generating visually and physically plausible 3D hair models with modest user interaction. By solving an unambiguous 3D vector field explicitly from the image and adopting an iterative hair generation algorithm, we can create hair models that not only visually match the original input very well but also possess physical plausibility (e.g., having strand roots fixed on the scalp and preserving the length and continuity of real strands in the image as much as possible). The latter property enables us to manipulate hair in many new ways that were previously very difficult with a single image, such as dynamic simulation or interactive hair shape editing. We further extend the modeling approach to handle simple video input, and generate dynamic 3D hair models. This allows users to manipulate hair in a video or transfer styles from images to videos.Bacher Ivan ET AL: "An Advert Creation System for 3D Product Placements: European Conference, ECML PKDD 2020, Ghent, Belgium, September 14-18, 2020, Proceedings, Part IV" In: "European Conference on Computer Vision", 14 September 2020 (2020-09-14), Springer Berlin Heidelberg, Copenhagen, Denmark, ISSN: 0302-9743 vol. 12460, pages 224-239, discloses that over the past decade, the evolution of video-sharing platforms has attracted a significant amount of investments on contextual advertising. The common contextual advertising platforms utilize the information provided by users to integrate 2D visual ads into videos. The existing platforms face many technical challenges such as ad integration with respect to occluding objects and 3D ad placement. This paper presents a Video Advertisement Placement & Integration (Adverts) framework, which is capable of perceiving the 3D geometry of the scene and camera motion to blend 3D virtual objects in videos and create the illusion of reality. The proposed framework contains several modules such as monocular depth estimation, object segmentation, background foreground separation, alpha matting and camera tracking. Our experiments conducted using Adverts framework indicates the significant potential of this system in contextual ad integration, and pushing the limits of advertising industry using mixed reality technologies.

WO2021/068799A1 discloses techniques for occlusion and collision detection in an AR session. In an example, a depth sensor is used to generate a depth image. Distortions in the depth image are reduced or eliminated by at least dividing the depth image into depth layers and moving depth pixels between the layers. An RGBD image is generated from the depth image, as updated, and an RGB image generated at substantially the same time as the depth image. Occlusion of a virtual object is detected based on the RGBD image. Further, a 3D model of the real-world environment is generated from the depth images, as updated, and includes multi-level voxels. Collision with the virtual object is detected based on the multi-level voxels. Rendering of the virtual object in an AR session is based on the occlusion and collision detection.

BALAKRISHNAN GUHA ET AL: "Synthesizing Images of Humans in Unseen Poses" (IEEE/CVF CONFERENCE ON COMPUTER VISION AND PATTERN RECOGNITION, I June 2018 (2018-06-01), pages 8340-8348) discloses that we address the computational problem of novel human pose synthesis. Given an image of a person and a desired pose, we produce a depiction of that person in that pose, retaining the appearance of both the person and background. We present a modular generative neural network that synthesizes unseen poses using training pairs of images and poses taken from human action videos. Our network separates a scene into different body part and background layers, moves body parts to new locations and refines their appearances, and composites the new foreground with a hole-filled background. These subtasks, implemented with separate modules, are trained jointly using only a single target image as a supervised label. We use an adversarial discriminator to force our network to synthesize realistic details conditioned on pose. We demonstrate image synthesis results on three action classes: golf yoga/workouts and tennis, and show that our method produces accurate results within action classes as well as across action classes. Given a sequence of desired poses, we also produce coherent videos of actions.

### SUMMARY

This disclosure provides a special effect generation method and apparatus, an electronic device, and a storage medium.

According to some embodiments, the present disclosure provides a special effect generation method, comprising:
segmenting an image to be processed to obtain multiple layers, in response to a special effect instruction;
obtaining three-dimensional (3D) pose information of a special effect object, and determining an occlusion relationship between the special effect object and the multiple layers based on the 3D pose information (S120,S320, S520, S830) wherein the special effect object is a virtual object generated by constructing a 3D model or a real object corresponding to a layer in the image to be processed, for a real object, a selection control to select a special effect object from a layer is set in an interface, by triggering the selection control of the layer, the layer is selected as a real object layer, and a real object identified from the layer is used as the special effect object, for each type of virtual object, a selection control of a special effect corresponding to the type of virtual object is set in the interface, and different virtual objects are obtained as the special effect object by triggering different selection controls; and
rendering the special effect object or the multiple layers according to the occlusion relationship to generate a special effect image, comprising:
   in response to the special effect object being a virtual object, identifying a 3D position of a plane layer among the multiple layers, fitting a preset surface of the special effect object to the plane layer according to the 3D position of the plane layer and the 3D pose information of the special effect object (S540), and superimposing and rendering a region of the special effect object that is not occluded by the multiple layers on a layer corresponding to the region (S550);
   in response to the special object being a real object in the image to be processed, inpainting pixels of a region meeting a condition in each of the multiple layers (S840), wherein the region meeting the condition comprises a region occluded by a part of the special effect object or the whole special effect object in the image to be processed, and occluding the part of the special effect object or the whole special effect object in the occlusion relationship.

According to other embodiments, the present disclosure further provides a special effect generation apparatus, comprising:
a segmentation module configured to segment an image to be processed to obtain multiple layers, in response to a special effect instruction;
an occlusion relationship determination module (920) configured to obtain three-dimensional (3D) pose information of a special effect object, and determine an occlusion relationship between the special effect object and the multiple layers based on the 3D pose information, wherein the special effect object is a virtual object generated by constructing a 3D model or a real object corresponding to a layer in the image to be processed, for a real object, a selection control to select a special effect object from a layer is set in an interface, by triggering the selection control of the layer, the layer is selected as a real object layer, and a real object identified from the layer is used as the special effect object, for each type of virtual object, a selection control of a special effect corresponding to the type of virtual object is set in the interface, and different virtual objects are obtained as the special effect object by triggering different selection controls;
a rendering module (930) configured to render the special effect object or the multiple layers according to the occlusion relationship to generate a special effect image, comprising: in response to the special effect object being a virtual object, identifying a 3D position of a plane layer among the multiple layers, fitting a preset surface of the special effect object to the plane layer according to the 3D position of the plane layer and the 3D pose information of the special effect object, and superimposing and rendering a region of the special effect object that is not occluded by the multiple layers on a layer corresponding to the region; in response to the special effect object being a real object in the image to be processed, inpainting pixels of a region meeting a condition in each of the multiple layers, wherein the region meeting the condition comprises a region occluded by a part of the special effect object or the whole special effect object in the image to be processed, and occluding the part of the special effect object or the whole special effect object in the occlusion relationship.

According to still other embodiments, the present disclosure further provides an electronic device, comprising:
at least one processor;
a storage device for storing at least one program that, when executed by at least one processor, causes the at least one processor to implement the special effect generation method according to any embodiment of the present disclosure.
   According to still other embodiments, the present disclosure further provides a computer-readable storage medium containing computer executable instructions that, when executed by a processor, causes the processor to execute the special effect generation method according to any embodiment of the present disclosure.

### BRIEF DESCRIPTION OF THE DRAWINGS

FIG. 1 is a flowchart of a special effect generation method provided in an embodiment of the present disclosure;
FIG. 2 is a schematic diagram of layers segmented in the special effect generation method provided in an embodiment of the present disclosure;
FIG. 3 is a flowchart of a special effect generation method provided in an embodiment of the present disclosure;
FIG. 4 is a schematic diagram of a preset trigger in the special effect generation method provided in an embodiment of the present disclosure;
FIG. 5 is a flowchart of a special effect generation method provided in an embodiment of the present disclosure;
FIG. 6 is a schematic diagram of an occlusion relationship in the special effect generation method provided in an embodiment of the present disclosure;
FIG. 7 is a schematic diagram of another occlusion relationship in the special effect generation method provided in an embodiment of the present disclosure;
FIG. 8 is a flowchart of a special effect generation method provided in an embodiment of the present disclosure;
FIG. 9 is a schematic structural diagram of a special effect generation apparatus provided in an embodiment of the present disclosure;
FIG. 10 is a schematic structural diagram of an electronic device provided in an embodiment of the present disclosure.

### DETAILED DESCRIPTION

Below, embodiments of this disclosure will be described with reference to the drawings. Although some embodiments of the present disclosure are shown in the drawings, it should be understood that the present disclosure can be implemented in various forms, and these embodiments are provided for the purpose of understanding the present disclosure. The accompanying drawings and embodiments disclosed herein are for illustrative purposes only.

It should be understood that the various steps described in the methods of the embodiments of the present disclosure may be executed in a different order, and/or executed in parallel. In addition, the methods may comprise additional steps and/or some of the illustrated steps may be omitted. The scope of this disclosure is not limited in this regard.

The term "comprising" and its variants as used herein is an open-ended mode expression, that is, "comprising but not limited to". The term "based on" means "based at least in part on". The term "one embodiment" means "at least one embodiment"; the term "another embodiment" means "at least one additional embodiment"; The term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order of functions performed by these devices, modules or units, or interdependence therebetween.

It should be noted that the modifications of "a" and "a plurality of" mentioned in the present disclosure are illustrative and not restrictive, and those skilled in the art should understand that unless clearly indicated in the context, they should be understood as "one or more".

The inventor has found that the special effects provided in the APPs in the related technologies are relatively monotonous and cannot meet the needs of the users.

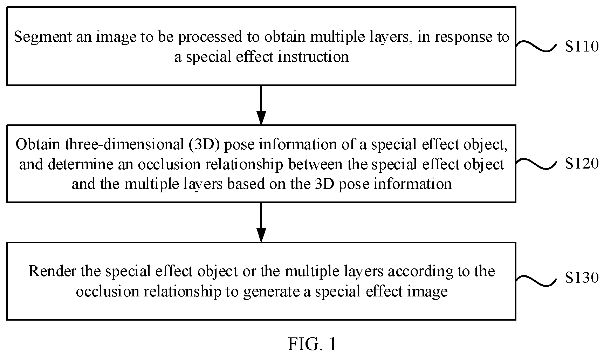

FIG. 1 is a flowchart of a special effect generation method provided in an embodiment of the present disclosure. The embodiment is applicable to generating an image special effect, for example, to a situation where an image is rendered based on an occlusion relationship between a determined special effect object and some layers to obtain a special effect of presenting the special effect object as a giant object. The method can be performed by a special effect generation apparatus that can be integrated into an image enhancement App and installed together with the App in an electronic device, such as a mobile phones, a computer, etc.

As shown in FIG. 1, the special effect generation method provided in this embodiment comprises the following steps.

In S110, an image to be processed is segmented to obtain multiple layers, in response to a special effect instruction.

In some embodiments, an APP having a special effect generation apparatus integrated can start running in response to a launch operation (such as a click operation on an APP icon) after being installed on an electronic device. After the APP is launched, the image to be processed, which may be a static image or a dynamic image, is selected from a storage of the electronic device in response to a trigger operation on an image selection control in an interface. In addition, the APP can also capture an image in real time using a camera equipped by the electronic device in response to a trigger operation on an image acquisition control in the interface, and can use the image captured in real time as the image to be processed.

The APP can present the image to be processed in an editing area of the interface, and the interface further comprises a selection control of a special effect object. When the selection control is triggered, the special effect instruction can be generated. Accordingly, the APP can segment the image to be processed in response to the special effect instruction.

The image to be processed can be segmented based on traditional segmentation methods (such as a pixel region growth algorithm, an edge segmentation algorithm, etc.); it is also possible to segment the image to be processed based on a supervised learning segmentation model (such as a fully convolutional network model, a U-net model, etc.).

Segmented regions that represents a same semantics or a same individual can be used as a layer, allowing more layers to be segmented, thus increasing a variety and flexibility of special effects. For example, if regions that represents a same semantics are taken as a layer, regions representing the sky can be considered as a layer, and regions representing buildings can be used as another layer. If regions that represents a same individual as a layer, regions representing building 1 can be considered as a layer, and regions representing building 2 can be used as another layer.

In S120, three-dimensional (3D) pose information of a special effect object is obtained, and an occlusion relationship between the special effect object and the multiple layers is determined based on the 3D pose information.

In some embodiments, the special effect object can be a virtual object generated by constructing a 3D model. For each type of virtual object, a selection control of a special effect corresponding to the type of virtual object can be set in the interface, and different virtual objects can be obtained as the special effect object by triggering different selection controls.

The special effect object can also be a real object corresponding to a layer in the image to be processed. It can be considered that the multiple layers obtained through segmentation comprise a real object layer. Correspondingly, before obtaining the 3D pose information of the special effect object, the method can further comprise: determining a real object in the real object layer as the special effect object. For example, for a real object, there can be a selection control to select a special effect object from the layer. By triggering the selection control of the layer, the real object layer can be selected, and the real object identified from the layer can be used as the special effect object.

The 3D pose information can comprise information such as the 3D positions and rotation angles of multiple feature points on the special effect object. The feature points can be points such as corner points and/or joint points, which can represent shape features of the special effect object. If the special effect object is a virtual object, the 3D pose information corresponding to the virtual object can be directly obtained from a storage of the electronic device or a backend server of the APP; if the special effect object is a real object, the 3D pose information can be determined based on estimated image depth values.

The determining the occlusion relationship between the special effect object and the multiple layers based on the 3D pose information comprises: determining an occluded area of the special effect object, a layer that occludes the occluded area and an area that is not occluded by the layers of the special effect object, based on a supervised learning occlusion relationship determination model, according to the 3D pose information of the multiple feature points of the special effect object. The occluded area and the area that is not occluded can be determined based on the multiple feature points. Thereby, the occlusion relationship between the special effect object and the multiple layers can be obtained.

In some embodiments, the determining the occlusion relationship between the special effect object and the multiple layers based on the 3D pose information comprises: determining an overlapping relationship of the multiple layers based on depth information of each of the multiple layers; and determining the occlusion relationship between the special effect object and the multiple layers according to the 3D pose information of multiple feature points of the special effect object and the overlapping relationship of the multiple layers.

In these embodiments, after segmenting the image to be processed to obtain the multiple layers, a distance between the camera and an object in the scene can also be estimated based on an image depth algorithm to obtain depth information for each of the multiple layers; moreover, the overlapping relationship between the multiple layers can be determined based on the depth information of the each of the multiple layers. Correspondingly, the occlusion relationship between the special effect object and the multiple layers can be determined based on a supervised learning occlusion relationship determination model, according to the 3D pose information of the multiple feature points of the special effect object and the overlapping relationship between the multiple layers.

For example, assuming that the depth of Region 1 of the special effect object is less than that of Region 2, and Layer 1 is overlaid on Layer 2, the occlusion relationship can comprise: Region 1 of the special effect object occludes Layer 1, and Region 2 is occluded by Layer 1 but not by Layer 2.

In S130, the special effect object or the multiple layers are rendered according to the occlusion relationship to generate a special effect image.

The rendering the special effect object or the multiple layers according to the occlusion relationship may comprise: if the special effect object is a virtual object, rendering a part of the special effect object that is not occluded by the multiple layers; if the special effect object is a real object, rendering a region of a layer that is previously occluded by the special effect object, but is not occluded by the special effect object in the occlusion relationship.

By rendering the special effect object or the multiple layers based on the occlusion relationship between the special effect object and the multiple layers, a new perspective relationship between the special effect object and the multiple layers can be presented, which can visually change a size of the special effect object and achieve a more diversified special effect presentation to meet users' needs.

In some embodiments, it is possible to determine at least one pattern of the occlusion relationship between the special effect object and the multiple layers. For example, in Pattern 1 of the occlusion relationship, Layer 1 is occluded by Region 1 of the special effect object; in Pattern 2 of the occlusion relationship, Region 1 of the special effect object is occluded by Layer 1. Correspondingly, when rendering the special effect object or the multiple layers based on the occlusion relationship, rendering can be performed with different patterns of the occlusion relationship in response to a switch instruction to generate special effect images with different effects, thereby improving a variety and flexibility of special effects and achieving more diverse special effects. On this basis, users can save satisfied special effect images that meet their needs to a certain extent.

In some cases, in order to make a change in size of the special effect object more intense in terms of visual sense, the rendering the special effect object based on the occlusion relationship between the special effect object and the multiple layers may further comprise: rendering the special effect object with a change in size of the special effect object. After determining the 3D positions of the multiple feature points of the special effect object, a size of the special effect object can be changed by synchronously adjusting a distance relationship between the 3D positions of the multiple feature points. For example, by increasing a distance between the 3D positions of every two feature points, the size of the special effect object can be increased; by decreasing the distance between the 3D positions of every two feature points, the size of the special effect object can be decreased. When users expect the special effect object in the special effect image to appear as a giant object or a reduced object, an enlarged or reduced special effect object is rendered, improving a visual effect and users' experience.

In some embodiments, the multiple layers comprise a foreground layer, a background layer, and a plane layer; and the occlusion relationship comprises an occlusion relationship between the foreground layer and the special effect object.

In these embodiments, there may be three layers, and the special effect object can be always overlaid on the background layer. If the special effect object is a virtual object, the virtual object can be fitted to the plane layer to create an effect of a virtual object placed or standing on the plane layer.

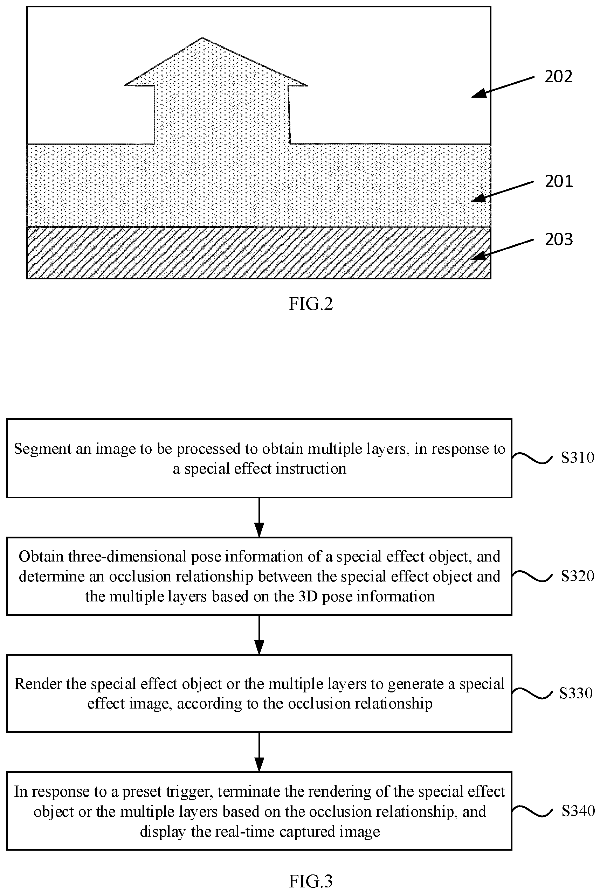

As an illustration, FIG. 2 is a schematic diagram of layers segmented in the special effect generation method provided in an embodiment of the present disclosure. As shown in FIG. 2, the layers can comprise a building layer 201, a sky layer 202, and a ground layer 203. The building layer 201 is overlaid on the sky layer 202, and can be used as the foreground layer. The sky layer 202 is the background layer, and the ground layer 203 is the plane layer. The ground layer 203 can be used to place a virtual object.

When determining the occlusion relationship between the special effect object and multiple layers, it is possible to determine an occlusion relationship between the special effect object and the foreground layer only based on the 3D pose information of multiple local regions composed of feature points of the special effect object. By rendering the special effect object or the multiple layers based on the occlusion relationship between the special effect object and the foreground layer, a new perspective relationship between the special effect object and the foreground layer can be presented, which can visually change the size of the special effect object, increase a speed of special effect rendering, and improve the users' experience.

In the technical solution of the embodiments, in response to the special effect instruction, the image to be processed is segmented to obtain the multiple layers; the 3D pose information of the special effect object is obtained, and the occlusion relationship between the special effect object and the multiple layers is determined based on the 3D pose information; according to the occlusion relationship, the special effect object or the multiple layers are rendered to generate the special effect image. By rendering the special effect object or the multiple layers based on the occlusion relationship between the multiple layers and the special effect object, more diverse special effects can be achieved to meet users' needs.

This embodiment can be combined with the schemes of the special effect generation method provided in the above embodiments. The special effect generation method provided in this embodiment comprises: in a scenario of capturing an image in real time, in response to a preset trigger, a layered rendering based on the occlusion relationship is switched to terminate the layered rendering and display only an original image. It is possible to change a perspective relationship of an image based on a preset trigger in a video capturing scenario, that is, to achieve imperceptible switching between an image obtained by layered rendering layers with a special effect added and an original non-layered image in which no special effects are added, thereby enhancing a presentation effect of the video special effect and improving the users' experience.

FIG. 3 is a flowchart of a special effect generation method provided in an embodiment of the present disclosure. As shown in FIG. 3, if the image to be processed is a real-time captured image, the special effect generation method provided in this embodiment comprises the following steps.

In S310, an image to be processed is segmented to obtain multiple layers, in response to a special effect instruction.

In S320, 3D pose information of a special effect object is obtained, and an occlusion relationship between the special effect object and the multiple layers is determined according to the 3D pose information.

In S330, the special effect object or the multiple layers are rendered to generate a special effect image, according to the occlusion relationship.

In S340, in response to a preset trigger, the rendering of the special effect object or the multiple layers based on the occlusion relationship is terminated, and the real-time captured image is displayed.

In some embodiments, if the image to be processed is the real-time captured image and the special effect object is a virtual object, a presentation of the virtual object is switched by a preset trigger from appearing as a giant object by layered rendering to disappearing on the screen, thereby enhancing a special effect presentation effect in the video and improving the users' experience.

If the image to be processed is a real-time captured image and the special effect object is a real object, a presentation of the real object is switched by a preset trigger from appearing as a giant object by layered rendering to appearing as its original size. This achieves a visual effect of continuously changing a size of the special effect object from large to small, which can enhance a presentation effect of the special effect and improve the users' experience.

In some embodiments, the preset trigger comprises at least one of: a preset input operation, a trigger of a countdown timer, and an identification of a predefined action of the special effect object.

The preset operation can be a trigger operation input through a screen, a keyboard, or a mouse of an electronic device. Correspondingly, layered rendering and non-layered rendering can be switched in response to the trigger operation. A countdown timer can be set in response to a special effect instruction. Correspondingly, when the countdown timer is down to zero, it can trigger a switch between layered rendering and non-layered rendering. The predefined action can be an action such as the special effect object jumping to a certain height, an occluded limb lifting to a certain height, etc. Correspondingly, switching between layered rendering and non-layered rendering can be triggered when it is recognized that the action of the special effect object conforms to the predefined action. In addition, the preset trigger can also comprise other trigger events, such as a detection that a local region of a real object that is occluded advances a certain distance, which are not exhaustively listed here.

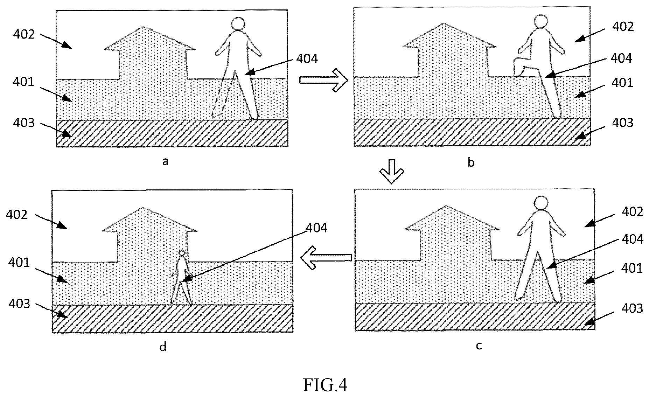

As an illustration, FIG. 4 is a schematic diagram of a preset trigger in the special effect generation method provided in an embodiment of the present disclosure. As shown in FIG. 4, the layers can comprise a building layer 401, a sky layer 402, a ground layer 403, and a character layer 404. A person corresponding to character layer 404, who is closest to the camera, can be identified as a special effect object. FIG. 4 comprises four images: a, b, c, and d. The preset trigger may be a leg lift action of the person detected in image b. Correspondingly, when the person's leg lift action is detected, a perspective relationship of the image can be switched, that is, from an effect that a leg of a giant is occluded by a building in image a to an effect that the giant's legs are not occluded by the building in the original non-layered image c, in order to present an effect of the giant crossing the building in sequence in images a, b, and c.

After switching from an giant effect to a normal human effect, the person can move away from the camera in image d to create an effect that the person is a normal human through a perspective relationship of the image. This enables a continuous transformation of a person from a giant to a normal person in a recorded video scenario, thus enhancing a presentation effect of the special effect and improving the users' experience.

In some embodiments, the person in image a can also be scaled up for rendering, and the person in image c and/or image d can be scaled down for rendering, which can make the change in size of the person's visual appearance more intense, thereby enhancing the presentation effect of the special effect.

In the technical solution of the embodiments, in the scenario of capturing an image in real time, in response to the preset trigger, the layered rendering based on the occlusion relationship is switched to terminate the layered rendering and display only an original image. It is possible to change a perspective relationship of an image based on a preset trigger in a video capturing scenario, that is, to achieve imperceptible switching between an image obtained by layered rendering layers with a special effect added and an original non-layered image in which no special effects are added, thereby enhancing a presentation effect of the video special effect and improving the users' experience.

The special effect generation method provided by the embodiments of the present disclosure and the special effect generation method provided by the above embodiments belong to a same inventive concept. For the technical details not described in detail in the embodiments, reference can be made to the above embodiments, and the embodiments can achieve a same beneficial effect as the above embodiment.

This embodiment can be combined with the schemes of the special effect generation method provided in the above embodiments. In the special effect generation method provided in this embodiment, a step of layered rendering that is performed when the special effect object is a virtual object will be described. By fitting the virtual object to a plane layer, an effect of the virtual object placed/standing on a plane surface can be presented. By rendering regions of the virtual object that occlude other layers, it is possible to achieve an occlusion interaction effect that some parts of the virtual object are in front of layers and some parts are behind the layers.

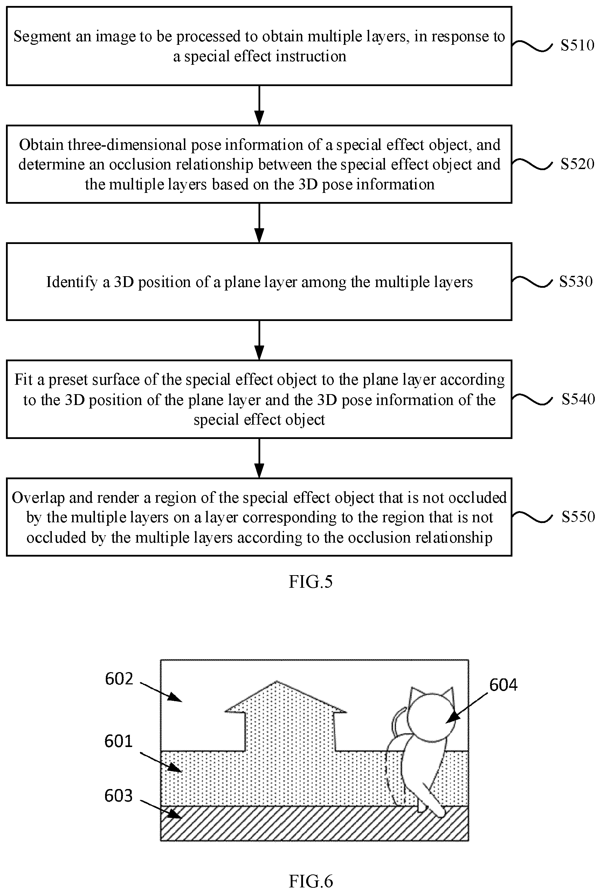

FIG. 5 is a flowchart of a special effect generation method provided in an embodiment of the present disclosure. As shown in FIG. 5, if the special effect object is a virtual object, the special effect generation method provided in this embodiment comprises the following steps.

In S510, an image to be processed is segmented to obtain multiple layers, in response to a special effect instruction.

In S520, 3D pose information of a special effect object is obtained, and an occlusion relationship between the special effect object and the multiple layers is determined according to the 3D pose information.

In S530, a 3D position of a plane layer among the multiple layers is identified.

In this embodiment, the 3D position of the plane can be constructed using the Simultaneous Localization and Mapping (SLAM) method. The 3D position of the plane can also be identified based on multiple parallax images using the Multi-view Stereo Net (MVS Net) method. In addition, other image geometry estimation algorithms that can be used to identify the 3D position of the plane layer can also be applied here, which will not be exhaustively listed here. By identifying the 3D position of the plane layer, a rendering effect of a virtual object placed/standing on the plane layer can be achieved, making a special effect rendering more realistic and natural.

In S540, a preset surface of the special effect object is fitted to the plane layer according to the 3D position of the plane layer and the 3D pose information of the special effect object.

In some embodiments, the preset surface can be a bottom surface of the special effect object (such as feet of an animal/person object). After the 3D position of the plane layer is determined, the 3D pose information of the preset surface of the special effect object can be aligned with the 3D position of the plane, resulting in a more natural fit between the special effect object and the plane layer.

In S550, a region of the special effect object that is not occluded by the multiple layers is superimposed and rendered on a layer corresponding to the region that is not occluded by the multiple layers according to the occlusion relationship.

In some embodiments, it is possible to determine different regions of the special effect object that occlude the layers, and overlay and render the regions on the layers corresponding to the regions. For those regions of the special effect object that are occluded by the layers, no rendering process is processed. This enables occlusion interaction with the layers, such that some regions of the virtual object are in front of the layers and some regions are behind the layers. Moreover, during the rendering process of the virtual object, a size of the virtual object can be changed based on sizes of objects in other layers of the image, and the resized special effect object can be rendered to make a rendering effect more harmonious.

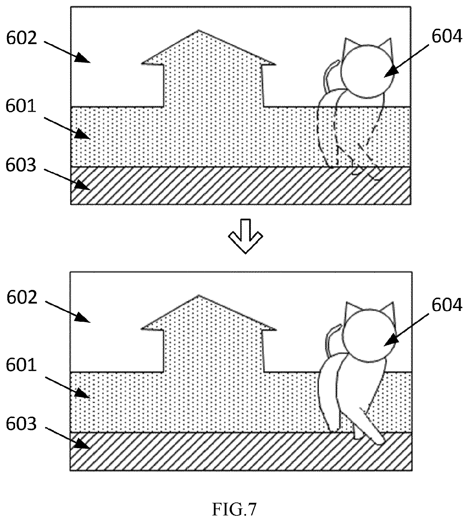

The determined occlusion relationship can comprise at least one pattern. FIG. 6 is a schematic diagram of an occlusion relationship in the special effect generation method provided in an embodiment of the present disclosure. FIG. 7 is a schematic diagram of another occlusion relationship in the special effect generation method provided in an embodiment of the present disclosure.

As shown in FIGS. 6 and 7, the layers can comprise a building layer 601, a sky layer 602, and a ground layer 603. Wherein, the building layer 601 is a foreground layer, and the sky layer 602 is a background layer. The ground layer 603 can be used to place a virtual objects 604, such as a 3D cat model constructed in FIGS. 6 and 7.

The occlusion relationship between the cat model and the foreground layer in FIG. 6 can comprise: an occlusion relationship that the front limbs of the cat model occlude the foreground layer, and the hind limbs are occluded by the foreground layer. By rendering the cat model based on the occlusion relationship, a visual effect of a giant cat crossing a building can be presented.

The cat model in FIG. 7 may be a dynamic model, and the occlusion relationship between the cat model and the foreground layer can comprise: an occlusion relationship that all limbs of the cat model are originally occluded by the foreground layer; and an occlusion relationship that after recognizing a jump of the cat model, all limbs of the cat model can occlude the foreground. By rendering the cat model based on these two occlusion relationships, a visual effect of a giant cat jumping from the back of a building to the front can be presented.

In the technical solution of the embodiments, a step of layered rendering that is performed when the special effect object is a virtual object is described. By fitting the virtual object to the plane layer, the effect of the virtual object placed/standing on the plane layer can be presented. By rendering the regions of the virtual object that occlude the layers, it is possible to achieve an occlusion interaction with the layers, such that some regions of the virtual object are in front of the layers and some regions are behind the layers. The special effect generation method provided by the embodiments of the present disclosure and the special effect generation method provided by the above embodiments belong to a same inventive concept. For the technical details not described in detail in the embodiments, reference can be made to the above embodiments, and the embodiments can achieve a same beneficial effect as the above embodiment.

This embodiment can be combined with the schemes of the special effect generation method provided in the above embodiments. In the special effect generation method provided in this embodiment, a step of layered rendering that is performed when the special effect object is a real object will be described. By inpainting a region previously occluded by the special effect object in the layers and not occluded by the special effect object in the occlusion relationship, an original perspective relationship of the real object can be changed, resulting in a new occlusion interaction between the real object and the layers, and achieving a visual change in size of the real object.

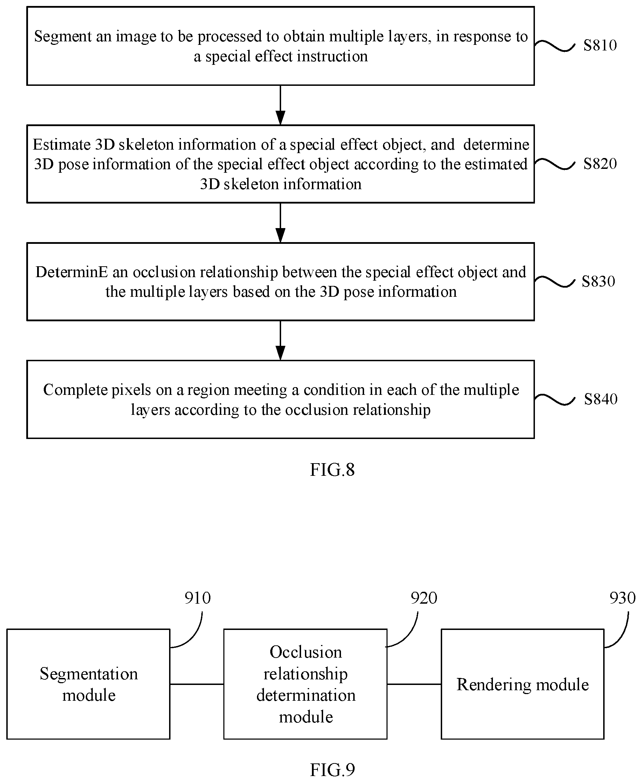

FIG. 8 is a flowchart of a special effect generation method provided in an embodiment of the present disclosure. As shown in FIG. 8, if the special effect object is a real object in the image to be processed, the special effect generation method provided in this embodiment comprises the following steps.

In S810, an image to be processed is segmented to obtain multiple layers, in response to a special effect instruction.

In S820, 3D skeleton information of a special effect object is estimated, and 3D pose information of the special effect object is determined according to the estimated 3D skeleton information.

A real object corresponding to a layer closer to a camera position can be selected as the special effect object, so that in response to a preset trigger, a more intense visual effect of the special effect object changing from large to small can be presented. After determining the special effect object, the 3D skeleton information of the special effect object can be estimated by computer vision estimation, which can be used as the 3D pose information of the special effect object to determine an anteroposterior relationship of multiple parts of the special effect object.

In S830, an occlusion relationship between the special effect object and the multiple layers is determined based on the 3D pose information.

In S840, a region meeting a condition in each of the multiple layers is inpainted according to the occlusion relationship.

In some embodiments, the region meeting the condition comprises a region occluded by the special effect object in the image to be processed, and occluding the special effect object in the occlusion relationship. For example, referring to image a in FIG. 4, a dashed part in the image can be considered as a region in a layer previously occluded by the special effect object, but occluding the special effect object in the occlusion relationship.

By inpainting the region in each of the multiple layers previously occluded by the special effect object and occluding the special effect object in the occlusion relationship, the original perspective relationship of the real object can be changed, resulting in a rendering effect that parts of the real object are in front of the layers and parts behind the layers, and changing a size of the real object in a visual sense.

In some embodiments, if the image to be processed is a real-time captured image, the inpainting the region meeting the condition in each of the multiple layers comprises: in response to the real-time captured image being captured with a fixed camera position, inpainting the region meeting the condition in each of the multiple layers based on pixels in a region corresponding to the region meeting the condition in the each of the multiple layers in a previous frame image; in response to the real-time captured image being captured with a moving camera position, inpainting the region meeting the condition in each of the multiple layers by a preset image inpainting algorithm.

A fixed camera position can be understood as capturing images by a stationary camera, whereas a moving camera position can be understood as capturing images by a movable camera.

The previous frame image can be considered as at least one historically captured image. In a case where the real-time captured image is captured with a fixed camera position, an image frame in which a region corresponding to the region meeting the condition in the each of the multiple layers is not occluded can be determined from the previous frame image, and the region in the image to be processed is inpainted based on pixels of the region in the image frame determined from the previous frame image.

In a case where the real-time captured image is captured with a moving camera position, the region meeting the condition in the layers changes. Pixels in the region can be calculated using a preset image inpainting algorithm (such as the in painting algorithm) based on pixels adjacent to the region in the image to be processed, so as to inpaint the region in the image to be processed. In addition, if the real-time captured image is an image read from a storage, the region can also be inpainted using a preset image inpainting algorithm.

These embodiments provide some methods for inpainting the region meeting the condition. Other methods are also applicable and are not exhaustively listed here.

In the technical solution of the embodiments, a step of layered rendering that is performed when the special effect object is a real object is described. By inpainting the region previously occluded by the special effect object in each of the layers and not occluded by the special effect object in the occlusion relationship, an original perspective relationship of the real object can be changed, resulting in a new occlusion interaction between the real object and the layers, and achieving a visual change in size of the real object. The special effect generation method provided by the embodiments of the present disclosure and the special effect generation method provided by the above embodiments belong to a same inventive concept. For the technical details not described in detail in the embodiments, reference can be made to the above embodiments, and the embodiments can achieve the same beneficial effect as the above embodiments.

FIG. 9 is a schematic structural diagram of a special effect generation apparatus provided in an embodiment of the present disclosure. The special effect generation apparatus provided in this embodiment is applicable to generating a special effect image, for example, to a situation where an image is rendered based on an occlusion relationship between a special effect object and layers to obtain a special effect of presenting the special effect object as a giant object.

As shown in FIG. 9, the special effect generation apparatus provided in this embodiment comprises:
a segmentation module 910 configured to segment an image to be processed to obtain multiple layers, in response to a special effect instruction; an occlusion relationship determination module 920 configured to obtain three-dimensional (3D) pose information of a special effect object, and determine an occlusion relationship between the special effect object and the multiple layers based on the 3D pose information; and a rendering module 930 configured to render the special effect object or the multiple layers according to the occlusion relationship to generate a special effect image.

In some embodiment, in response to the image to be processed being a real-time captured image, the special effect generation apparatus further comprises:
a special effect termination module configured to after generating the special effect image, in response to a preset trigger, terminate the rendering of the special effect object or the multiple layers according to the occlusion relationship, and display the real-time captured image, wherein the preset trigger comprises at least one of: a preset input operation, a trigger of a countdown timer, and an identification of a predefined action of the special effect object.

In some embodiments, the occlusion relationship determination module 920 may be further configured to:
determine an overlapping relationship of the multiple layers based on depth information of each of the multiple layers; and determine the occlusion relationship between the special effect object and the multiple layers according to the 3D pose information of multiple feature points of the special effect object and the overlapping relationship of the multiple layers.

In some embodiments, in response to the special effect object being a virtual object, the rendering module 930 may be configured to:
identify a 3D position of a plane layer among the multiple layers; fit a preset surface of the special effect object to the plane layer according to the 3D position of the plane layer and the 3D pose information of the special effect object; and superimpose and render a region of the special effect object that is not occluded by the multiple layers on a layer corresponding to the region.

In some embodiments, the multiple layers obtained through segmentation comprise a real object layer, correspondingly, the segmentation module 910 may be further configured to: before the obtaining the 3D pose information of the special effect object, determine a real object in the real object layer as the special effect object.

In some embodiments, in response to the special effect object being a real object in the image to be processed, the occlusion relationship determination module 920 may be configured to:
estimate 3D skeleton information of the special effect object, and determine the 3D pose information of the special effect object according to the estimated 3D skeleton information.

In some embodiments, in response to the special effect object being a real object in the image to be processed, the rendering module 930 may be configured to:
inpaint a region meeting a condition in each of the multiple layers, wherein the region meeting the condition comprises a region occluded by the special effect object in the image to be processed, and occluding the special effect object in the occlusion relationship.

In some embodiments, in response to the image to be processed being a real-time captured image, the rendering module 930 may be configured to:
in response to the real-time captured image being captured with a fixed camera position, inpaint the region meeting the condition in each of the multiple layers based on pixels in a region corresponding to the region meeting the condition in the each of the multiple layers in a previous frame image; and in response to the real-time captured image being captured with a moving camera position, inpaint the region meeting the condition in each of the multiple layers by a preset image inpainting algorithm.

In some embodiments, the rendering module 930 may be further configured to: render the special effect object with a change in size of the special effect object.

In some embodiments, the multiple layers comprise a foreground layer, a background layer, and a plane layer, and the occlusion relationship comprises an occlusion relationship between the foreground layer and the special effect object.

The special effect generation apparatus provided in this embodiment can execute the special effect generation method provided in any embodiment of the present disclosure, and has corresponding functional modules to implement the method and achieve the beneficial effect of the present disclosure.

It should be noted that the units and modules comprised in the above apparatus are only divided according to the functional logic, but are not limited to the above division, as long as the corresponding functions can be realized. In addition, the specific names of the functional units are only for the convenience of distinguishing from each other, and are not used to limit the protection scope of the embodiments of the present disclosure.

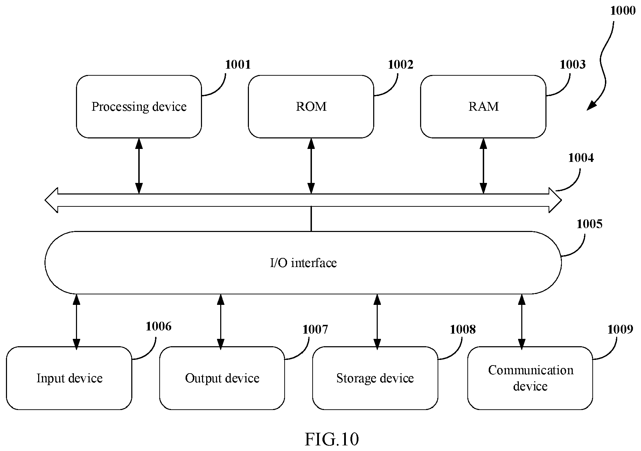

Referring to FIG. 10, a structural diagram of an electronic device (e.g., a terminal device or server shown in FIG. 10) 1000 suitable for implementing an embodiment of the present disclosure is shown. The terminal device 1000 of the embodiment of the present disclosure may comprise, but not limited to, a mobile terminal such as a mobile phone, a notebook computer, a digital broadcast receiver, a PDA (Personal Digital Assistant), a PAD (tablet computer), a PMP (Portable Multimedia Player), an on-board terminal (such as an on-board navigation terminal), and a fixed terminal such as a digital TV, a desktop computer, and the like. The electronic device 1000 shown in FIG. 10 is merely an example and should not impose any limitation on the function and scope of the embodiment of the present disclosure.

As shown in FIG. 10, the electronic device 1000 may comprise a processing device (e.g., a central processing unit, a graphics processor) 1001, which may perform various appropriate actions and processes according to a program stored in Read Only Memory (ROM) 1002 or a program loaded from storage device 1008 into Random Access Memory (RAM) 1003. In RAM 1003, various programs and data required for the operation of the electronic device 1000 are also stored. The processing device 1001, ROM 1002, and RAM 1003 are connected to each other through a bus 1004. Input/Output (I/O) interface 1005 is also connected to bus 1004.

Generally, the following devices can be connected to the I/O interface 1005: input devices 1006 comprising, for example, a touch screen, a touch pad, a keyboard, a mouse, a camera, a microphone, an accelerometer, a gyroscope, etc; output devices 1007 comprising a liquid crystal display (LCD), a speaker, a vibrator, etc.; a storage device 1008 such as a magnetic tape, a hard disk, etc; and a communication device 1009. The communication device 1009 enables the electronic device 1000 to communicate in a wireless or wired manner with other devices to exchange data. Although FIG. 10 shows the electronic device 1000 with various components, it should be understood that it is not required to implement or have all of these components. Alternatively, more or fewer components can be implemented or provided.

According to an embodiment of the present disclosure, the processes described above with reference to the flowchart can be implemented as a computer software program. For example, an embodiment of the present disclosure comprises a computer program product, which comprises a computer program carried on a non-transitory computer readable medium, and containing program code for executing the method shown in the flowchart. In such an embodiment, the computer program may be downloaded and installed from the network through the communication device 1009, or installed from the storage device 1008, or from the ROM 1002. When the computer program is executed by the processing device 1001, the above functions defined in the method of the embodiment of the present disclosure are performed.

The electronic device provided by this embodiment and the special effect generation method provided by the above embodiment belong to the same inventive concept. For the technical details not described in detail in this embodiment, reference can be made to the above embodiment, and this embodiment can achieve the same beneficial effect as the above embodiment.

Some embodiments of the present application provides a computer storage medium stored thereon a computer program that, when executed by a processor, cause the processor to implement the special effect generation method provided in any of the above embodiments.

The computer readable medium in the present disclosure may be a computer readable signal medium or a computer readable storage medium, or any combination of thereof. The computer readable storage medium can be, for example, but not limited to, an electronic, magnetic, optical, electromagnetic, infrared, or semiconductor system, apparatus, or device, or any combination of the above. More specific examples of the computer readable storage medium may comprise, but are not limited to: electrical connection with one or more wires, portable computer disk, hard disk, random access memory (RAM), read only memory (ROM), erasable programmable read only memory (EPROM) or flash memory (FLASH), fiber optics, portable compact disk Read only memory (CD-ROM), optical storage device, magnetic storage device, or any suitable combination of the foregoing. In the present disclosure, the computer readable storage medium can be any tangible medium that can contain or store a program, which can be used by or in connection with an instruction execution system, apparatus or device. In the present disclosure, a computer readable signal medium may comprise a data signal that is propagated in the baseband or as part of a carrier, carrying computer readable program code. Such propagated data signals can take a variety of forms comprising, but not limited to, electromagnetic signals, optical signals, or any suitable combination of the foregoing. The computer readable signal medium can also be any computer readable medium other than a computer readable storage medium, which can transmit, propagate, or transport a program for use by or in connection with the instruction execution system, apparatus, or device. Program code embodied on a computer readable medium can be transmitted by any suitable medium, comprising but not limited to wires, optical cables, RF (Radio Frequency), etc., or any suitable combination of the above.

In some embodiments, a client and a server can communicate using any currently known or future developed network protocol such as HTTP (HyperText Transfer Protocol), and can be interconnected by any form or medium of digital data communication, e.g., a communication network. Examples of communication networks comprise a Local Area Network ("LAN"), a Wide Area Network ("WAN"), an Internet (e.g., the Internet), and an end-to-end network (e. g., an ad hoc end-to-end network), as well as any currently known or future developed network.

The above computer readable medium may be comprised in the electronic device described above; or it may exist alone without being assembled into the electronic device.

The computer readable medium carries one or more programs that, when executed by the electronic device, cause the electronic device to perform steps of: segmenting an image to be processed to obtain multiple layers, in response to a special effect instruction; obtaining three-dimensional (3D) pose information of a special effect object, and determining an occlusion relationship between the special effect object and the multiple layers based on the 3D pose information; and rendering the special effect object or the multiple layers according to the occlusion relationship to generate a special effect image.

The computer program code for executing operations of the present disclosure may be complied by any combination of one or more program design languages, the program design languages comprising object-oriented program design languages, such as Java, Smalltalk, C++, etc, as well as conventional procedural program design languages, such as "C" program design language or similar program design language. A program code may be completely or partly executed on a user computer, or executed as an independent software package, partly executed on the user computer and partly executed on a remote computer, or completely executed on a remote computer or server. In the latter circumstance, the remote computer may be connected to the user computer through various kinds of networks, comprising local area network (LAN) or wide area network (WAN), or connected to external computer (for example using an internet service provider via Internet).

The flowcharts and block diagrams in the different depicted embodiments illustrate the architecture, functionality, and operation of some possible implementations of apparatus, methods and computer program products. In this regard, each block in the flowchart or block diagrams may represent a module, segment, or portion of code, which comprises one or more executable instructions for implementing the specified function or functions. It should also be noted that, in some alternative implementations, the functions noted in the block may occur out of the order noted in the FIG.s. For example, two blocks shown in succession may be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units involved in the embodiments described in the present disclosure can be implemented in software or hardware. Wherein, the names of the units or modules do not constitute a limitation on the units or modules themselves under certain circumstances.

The functions described above may be performed at least in part by one or more hardware logic components. For example, without limitation, exemplary types of hardware logic components that can be used comprise: Field Programmable Gate Array (FPGA), Application Specific Integrated Circuit (ASIC), Application Specific Standard Product (ASSP), System on Chip (SOC), Complex Programmable Logic Device (CPLD), and the like.

In the context of the present disclosure, a machine-readable medium may be a tangible medium, which may contain or store a program for use by or in connection with an instruction execution system, apparatus, or device. The machine-readable medium may be a machine-readable signal medium or a machine-readable storage medium. The machine readable medium may comprise, but is not limited to, an electronic, magnetic, optical, electromagnetic, infrared, or semiconductor, apparatus, or device, or any suitable combination of thereof. More specific examples of the machine-readable storage medium may comprise electrical connection with one or more wires, portable computer disk, hard disk, random access memory (RAM), read only memory (ROM), erasable programmable read only memory (EPROM or flash), fiber optics, portable compact disk Read only memory (CD-ROM), optical storage device, magnetic storage device, or any suitable combination of the foregoing. method,

In addition, although the operations are depicted in a specific order, this should not be understood as requiring these operations to be performed in the specific order shown or performed in a sequential order. Under certain circumstances, multitasking and parallel processing may be advantageous. Likewise, although several specific implementation details are comprised in the above discussion, these should not be construed as limiting the scope of the present disclosure. Certain features that are described in the context of separate embodiments can also be implemented in combination in a single embodiment. Conversely, various features described in the context of a single embodiment can also be implemented in multiple embodiments individually or in any suitable subcombination. The scope of the invention is defined by the appended claims.

## Claims

1. A special effect generation method, comprising:
segmenting an image to be processed to obtain multiple layers, in response to a special effect instruction (S110, S310, S510, S810);
obtaining three-dimensional (3D) pose information of a special effect object, and determining an occlusion relationship between the special effect object and the multiple layers based on the 3D pose information (S120,S320, S520, S830) wherein the special effect object is a virtual object generated by constructing a 3D model or a real object corresponding to a layer in the image to be processed, for a real object,
a selection control to select a special effect object from a layer is set in an interface, by triggering the selection control of the layer, the layer is selected as a real object layer, and a real object identified from the layer is used as the special effect object, for each type of virtual object, a selection control of a special effect corresponding to the type of virtual object is set in the interface, and different virtual objects are obtained as the special effect object by triggering different selection controls; and
rendering the special effect object or the multiple layers according to the occlusion relationship to generate a special effect image (S130,S330), comprising:
in response to the special effect object being a virtual object, identifying a 3D position of a plane layer among the multiple layers, fitting a preset surface of the special effect object to the plane layer according to the 3D position of the plane layer and the 3D pose information of the special effect object (S540), and superimposing and rendering a region of the special effect object that is not occluded by the multiple layers on a layer corresponding to the region (S550);
in response to the special effect object being a real object in the image to be processed, inpainting pixels of a region meeting a condition in each of the multiple layers (S840), wherein the region meeting the condition comprises a region occluded by a part of the special effect object or the whole special effect object in the image to be processed, and occluding the part of the special effect object or the whole special effect object in the occlusion relationship.

2. The special effect generation method according to claim 1, further comprising, wherein after generating the special effect image and in response to the image to be processed being a real-time captured image:
in response to a preset trigger, terminating the rendering of the special effect object or the multiple layers according to the occlusion relationship, and displaying the real-time captured image (S340),
wherein the preset trigger comprises at least one of: a preset input operation, a trigger of a countdown timer, and an identification of a predefined action of the special effect object.

3. The special effect generation method according to claim 1, wherein the determining the occlusion relationship between the special effect object and the multiple layers based on the 3D pose information comprises:
determining an overlapping relationship of the multiple layers based on depth information of each of the multiple layers; and
determining the occlusion relationship between the special effect object and the multiple layers according to the 3D pose information of multiple feature points of the special effect object and the overlapping relationship of the multiple layers.

4. The special effect generation method according to claim 1, wherein the multiple layers obtained through segmentation comprise a real object layer and the method further comprises, before the obtaining the 3D pose information of the special effect object:
determining a real object in the real object layer as the special effect object.

5. The special effect generation method according to claim 1, wherein in response to the special effect object being a real object in the image to be processed, the obtaining the 3D pose information of the special effect object comprises:
estimating 3D skeleton information of the special effect object, and determining the 3D pose information of the special effect object according to the estimated 3D skeleton information (S820).

6. The special effect generation method according to claim 1, wherein in response to the image to be processed being a real-time captured image, the inpainting the region meeting the condition in each of the multiple layers comprises:
in response to the real-time captured image being captured with a fixed camera position, inpainting the region meeting the condition in each of the multiple layers based on pixels in a region corresponding to the region meeting the condition in the each of the multiple layers in a previous frame image; and
in response to the real-time captured image being captured with a moving camera position, inpainting the region meeting the condition in each of the multiple layers by a preset image inpainting algorithm.

7. The special effect generation method according to claim 1, wherein the rendering the special effect object comprises:
rendering the special effect object with a change in size of the special effect object.

8. The special effect generation method according to any one of claims 1 to 7, wherein the multiple layers comprise a foreground layer, a background layer, and a plane layer, and the occlusion relationship comprises an occlusion relationship between the foreground layer and the special effect object, in a case where the special effect object is a virtual object, a preset surface of the special effect object is fitted to the plane layer.

9. A special effect generation apparatus, comprising:
a segmentation module (910) configured to segment an image to be processed to obtain multiple layers, in response to a special effect instruction;
an occlusion relationship determination module (920) configured to obtain three-dimensional (3D) pose information of a special effect object, and determine an occlusion relationship between the special effect object and the multiple layers based on the 3D pose information, wherein the special effect object is a virtual object generated by constructing a 3D model or a real object corresponding to a layer in the image to be processed, for a real object,
a selection control tc select a special effect object from a layer is set in an interface, by triggering the selection control of the layer, the layer is selected as a real object layer, and a real object identified from the layer is used as the special effect object, for each type of virtual object, a selection control of a special effect corresponding to the type of virtual object is set in the interface, and different virtual objects are obtained as the special effect object by triggering different selection controls;
a rendering module (930) configured to render the special effect object or the multiple layers according to the occlusion relationship to generate a special effect image, comprising: in response to the special effect object being a virtual object, identifying a 3D position of a plane layer among the multiple layers, fitting a preset surface of the special effect object to the plane layer according to the 3D position of the plane layer and the 3D pose information of the special effect object, and superimposing and rendering a region of the special effect object that is not occluded by the multiple layers on a layer corresponding to the region; in response to the special object being a real object in the image to be processed, inpainting pixels of a region meeting a condition in each of the multiple layers, wherein the region meeting the condition comprises a region occluded by a part of the special effect object or the whole special effect object in the image to be processed, and occluding the part of the special effect object or the whole special effect object in the occlusion relationship.

10. An electronic device, comprising:
at least one processor;
a storage device for storing at least one program that, when executed by at least one processor, causes the at least one processor to implement the special effect generation method of any one of claims 1 to 9.

11. A computer-readable storage medium containing computer executable instructions that, when executed by a processor, causes the processor to execute the special effect generation method according to any one of claims 1 to 9.

## Patentansprüche

1. Verfahren zur Erzeugung von Spezialeffekten, umfassend:
Segmentieren eines zu verarbeitenden Bildes, um mehrere Schichten zu erhalten, als Reaktion auf eine Spezialeffektanweisung (S110, S310, S510, S810);
Erhalten von dreidimensionalen (3D) Poseinformationen eines Spezialeffektobjekts und Bestimmen einer Verdeckungsbeziehung zwischen dem Spezialeffektobjekt und den mehreren Schichten basierend auf den 3D-Poseinformationen (S120, S320, S520, S830), wobei das Spezialeffektobjekt ein virtuelles Objekt, das durch die Konstruktion eines 3D-Modells erzeugt wird, oder ein reales Objekt, das einer Schicht im zu verarbeitenden Bild entspricht, ist, wobei für ein reales Objekt eine Auswahlsteuerung zum Auswählen eines Spezialeffektobjekts aus einer Schicht in einer Schnittstelle festgelegt wird, wobei durch Auslösen der Auswahlsteuerung der Schicht, die Schicht als eine reale Objektschicht ausgewählt wird und ein aus der Schicht identifiziertes reales Objekt als das Spezialeffektobjekt verwendet wird, wobei für jeden Typ von virtuellem Objekt eine Auswahlsteuerung eines Spezialeffekts entsprechend dem Typ von virtuellem Objekt in der Schnittstelle festgelegt wird, und wobei durch Auslösen verschiedener Auswahlsteuerungen unterschiedliche virtuelle Objekte als das Spezialeffektobjekt erhalten werden; und
Rendern des Spezialeffektobjekts oder der mehreren Schichten entsprechend der Verdeckungsbeziehung, um ein Spezialeffektbild zu erzeugen (S130, S330), umfassend:
als Reaktion darauf, dass das Spezialeffektobjekt ein virtuelles Objekt ist, Identifizieren einer 3D-Position einer Ebenenschicht unter den mehreren Schichten, Anpassen einer vorab festgelegten Oberfläche des Spezialeffektobjekts entsprechend der 3D-Position der Ebenenschicht und den 3D-Poseinformationen des Spezialeffektobjekts an die Ebenenschicht (S540) und Überlagern und Rendern eines Bereichs des Spezialeffektobjekts, der nicht von den mehreren Schichten verdeckt wird, auf einer Schicht, die diesem Bereich entspricht (S550);
als Reaktion darauf, dass das Spezialeffektobjekt ein reales Objekt im zu verarbeitenden Bild ist, Rekonstruieren von Pixeln eines Bereichs, der eine Bedingung in jeder der mehreren Schichten erfüllt (S840), wobei der Bereich, der die Bedingung erfüllt, einen Bereich umfasst, der von einem Teil des Spezialeffektobjekts oder von dem gesamten Spezialeffektobjekt im zu verarbeitenden Bild verdeckt wird, und Verdecken des Teils des Spezialeffektobjekts oder des gesamten Spezialeffektobjekts in der Verdeckungsbeziehung.

2. Verfahren zur Erzeugung von Spezialeffekten nach Anspruch 1, weiter umfassend, nach dem Erzeugen des Spezialeffektbildes und als Reaktion darauf, dass das zu verarbeitende Bild ein in Echtzeit aufgenommenes Bild ist:
als Reaktion auf einen vorab festgelegten Auslöser, Beenden des Renderns des Spezialeffektobjekts oder der mehreren Schichten entsprechend der Verdeckungsbeziehung und Anzeigen des in Echtzeit aufgenommenen Bildes (S340),
wobei der vorab festgelegte Auslöser mindestens eines umfasst von: einer vorab festgelegten Eingabeoperation, einem Auslöser eines Countdown-Timers und einer Identifizierung einer vordefinierten Aktion des Spezialeffektobjekts.

3. Verfahren zur Erzeugung von Spezialeffekten nach Anspruch 1, wobei das Bestimmen der Verdeckungsbeziehung zwischen dem Spezialeffektobjekt und den mehreren Schichten basierend auf 3D-Poseinformationen umfasst:
Bestimmen einer Überlappungsbeziehung der mehreren Schichten basierend auf Tiefeninformationen jeder der mehreren Schichten; und
Bestimmen der Verdeckungsbeziehung zwischen dem Spezialeffektobjekt und den mehreren Schichten entsprechend den 3D-Poseinformationen mehrerer Merkmalspunkte des Spezialeffektobjekts und der Überlappungsbeziehung der mehreren Schichten.

4. Verfahren zur Erzeugung von Spezialeffekten nach Anspruch 1, wobei die durch Segmentierung erhaltenen mehreren Schichten eine reale Objektschicht umfassen und das Verfahren, vor dem Erhalten der 3D-Poseinformationen des Spezialeffektobjekts weiter umfasst:
Bestimmen eines realen Objekts in der realen Objektschicht als das Spezialeffektobjekt.

5. Verfahren zur Erzeugung von Spezialeffekten nach Anspruch 1, wobei als Reaktion darauf, dass das Spezialeffektobjekt ein reales Objekt im zu verarbeitenden Bild ist, das Erhalten der 3D-Poseinformationen des Spezialeffektobjekts umfasst:
Schätzen der 3D-Skelettinformationen des Spezialeffektobjekts und Bestimmen der 3D-Poseinformationen des Spezialeffektobjekts entsprechend den geschätzten 3D-Skelettinformationen (S820).

6. Verfahren zur Erzeugung von Spezialeffekten nach Anspruch 1, wobei als Reaktion darauf, dass das zu verarbeitende Bild ein in Echtzeit aufgenommenes Bild ist, das Rekonstruieren des Bereichs, der die Bedingung in jeder der mehreren Schichten erfüllt, umfasst:
als Reaktion darauf, dass das in Echtzeit aufgenommene Bild mit fester Kameraposition aufgenommen wird, Rekonstruieren des Bereichs, der die Bedingung in jeder der mehreren Schichten erfüllt, basierend auf Pixeln in einem Bereich, der dem Bereich entspricht, der die Bedingung in jeder der mehreren Schichten in einem vorherigen Einzelbild erfüllt; und
als Reaktion darauf, dass das in Echtzeit aufgenommene Bild mit einer sich bewegenden Kameraposition aufgenommen wird, Rekonstruieren des Bereichs, der die Bedingung in jeder der mehreren Schichten erfüllt, durch einen vorab festgelegten Bildrekonstruktionsalgorithmus.

7. Verfahren zur Erzeugung von Spezialeffekten nach Anspruch 1, wobei das Rendern des Spezialeffektobjekts umfasst:
Rendern des Spezialeffektobjekts mit einer Größenänderung des Spezialeffektobjekts.

8. Verfahren zur Erzeugung von Spezialeffekten nach einem der Ansprüche 1 bis 7, wobei die mehreren Schichten eine Vordergrundschicht, eine Hintergrundschicht und eine Ebenenschicht umfassen, und wobei die Verdeckungsbeziehung eine Verdeckungsbeziehung zwischen der Vordergrundschicht und dem Spezialeffektobjekt umfasst, wobei in einem Fall, in dem das Spezialeffektobjekt ein virtuelles Objekt ist, eine vorab festgelegte Oberfläche des Spezialeffektobjekts an die Ebenenschicht angepasst wird.

9. Einrichtung zur Erzeugung von Spezialeffekten, umfassend:
ein Segmentierungsmodul (910), das ausgebildet ist zum Segmentieren eines zu verarbeitenden Bildes, um mehrere Schichten zu erhalten, als Reaktion auf eine Spezialeffektanweisung;
ein Verdeckungsbeziehung-Bestimmungsmodul (920), das ausgebildet ist zum Erhalten von dreidimensionalen (3D) Poseinformationen eines Spezialeffektobjekts und zum Bestimmen einer Verdeckungsbeziehung zwischen dem Spezialeffektobjekt und den mehreren Schichten basierend auf den 3D-Poseinformationen, wobei das Spezialeffektobjekt ein virtuelles Objekt, das durch die Konstruktion eines 3D-Modells erzeugt wird, oder ein reales Objekt, das einer Schicht im zu verarbeitenden Bild entspricht, ist, wobei für ein reales Objekt eine Auswahlsteuerung zum Auswählen eines Spezialeffektobjekts aus einer Schicht in einer Schnittstelle festgelegt wird, wobei durch Auslösen der Auswahlsteuerung der Schicht, die Schicht als eine reale Objektschicht ausgewählt wird und ein aus der Schicht identifiziertes reales Objekt als das Spezialeffektobjekt verwendet wird, wobei für jeden Typ von virtuellem Objekt eine Auswahlsteuerung eines Spezialeffekts entsprechend dem Typ von virtuellem Objekt in der Schnittstelle festgelegt wird, und wobei durch Auslösen verschiedener Auswahlsteuerungen unterschiedliche virtuelle Objekte als das Spezialeffektobjekt erhalten werden;
ein Rendering-Modul (930), das ausgebildet ist zum Rendern des Spezialeffektobjekts oder der mehreren Schichten entsprechend der Verdeckungsbeziehung, um ein Spezialeffektbild zu erzeugen, umfassend: als Reaktion darauf, dass das Spezialeffektobjekt ein virtuelles Objekt ist, Identifizieren einer 3D-Position einer Ebenenschicht unter den mehreren Schichten, Anpassen einer vorab festgelegten Oberfläche des Spezialeffektobjekts entsprechend der 3D-Position der Ebenenschicht und den 3D-Poseinformationen des Spezialeffektobjekts an die Ebenenschicht und Überlagern und Rendern eines Bereichs des Spezialeffektobjekts, der nicht von den mehreren Schichten verdeckt wird, auf einer Schicht, die diesem Bereich entspricht; als Reaktion darauf, dass das Spezialeffektobjekt ein reales Objekt im zu verarbeitenden Bild ist, Rekonstruieren von Pixeln eines Bereichs, der eine Bedingung in jeder der mehreren Schichten erfüllt, wobei der Bereich, der die Bedingung erfüllt, einen Bereich umfasst, der von einem Teil des Spezialeffektobjekts oder von dem gesamten Spezialeffektobjekt im zu verarbeitenden Bild verdeckt wird, und Verdecken des Teils des Spezialeffektobjekts oder des gesamten Spezialeffektobjekts in der Verdeckungsbeziehung.

10. Elektronische Vorrichtung, umfassend:
mindestens einen Prozessor;
eine Speichervorrichtung zum Speichern mindestens eines Programms, das, wenn es von mindestens einem Prozessor ausgeführt wird, den mindestens einen Prozessor veranlasst, das Verfahren zur Erzeugung von Spezialeffekten nach einem der Ansprüche 1 bis 9 zu implementieren.

11. Computerlesbares Speichermedium, das computerausführbare Anweisungen enthält, die, wenn sie von einem Prozessor ausgeführt werden, den Prozessor veranlassen, das Verfahren zur Erzeugung von Spezialeffekten nach einem der Ansprüche 1 bis 9 auszuführen.

## Revendications

1. Procédé de génération d'effet spécial, comprenant :
la segmentation d'une image à traiter pour obtenir de multiples couches, en réponse à une instruction d'effet spécial (S110, S310, S510, S810) ;
l'obtention d'informations de pose tridimensionnelle (3D) d'un objet d'effet spécial et la détermination d'une relation d'occlusion entre l'objet d'effet spécial et les multiples couches sur la base des informations de pose 3D (S120, S320, S520, S830), dans lequel l'objet d'effet spécial est un objet virtuel généré par la construction d'un modèle 3D ou un objet réel correspondant à une couche de l'image à traiter, pour un objet réel, une commande de sélection pour sélectionner un objet d'effet spécial à partir d'une couche est définie dans une interface, en activant la commande de sélection de la couche, la couche est sélectionnée comme couche d'objet réel, et un objet réel identifié à partir de la couche est utilisé comme objet d'effet spécial, pour chaque type d'objet virtuel, une commande de sélection d'un effet spécial correspondant au type d'objet virtuel est prévue dans l'interface, et différents objets virtuels sont obtenus comme objet d'effet spécial en actionnant différentes commandes de sélection ; et
le rendu de l'objet d'effet spécial ou des multiples couches conformément à la relation d'occlusion pour générer une image d'effet spécial (S130, S330), comprenant :
en réponse à l'objet d'effet spécial étant un objet virtuel, l'identification d'une position 3D d'une couche plane parmi les multiples couches, l'adaptation d'une surface prédéfinie de l'objet d'effet spécial à la couche plane conformément à la position 3D de la couche plane et des informations de pose 3D de l'objet d'effet spécial (S540), et la superposition et le rendu d'une région de l'objet d'effet spécial qui n'est pas occluse par les multiples couches sur une couche correspondant à la région (S550) ;
en réponse à l'objet d'effet spécial étant un objet réel dans l'image à traiter, le remplissage de pixels d'une région répondant à une condition dans chacune des multiples couches (S840), dans lequel la région répondant à la condition comprend une région occluse par une partie de l'objet d'effet spécial ou par l'objet d'effet spécial entier dans l'image à traiter, et l'occlusion de la partie de l'objet d'effet spécial ou l'objet d'effet spécial entier dans la relation d'occlusion.

2. Procédé de génération d'effet spécial selon la revendication 1, comprenant en outre, après la génération de l'image d'effet spécial et en réponse à l'image à traiter étant une image capturée en temps réel :
en réponse à un déclencheur prédéfini, l'interruption du rendu de l'objet d'effet spécial ou des multiples couches conformément à la relation d'occlusion et l'affichage de l'image capturée en temps réel (S340),
dans lequel le déclencheur prédéfini comprend au moins un parmi : une opération d'entrée prédéfinie, un déclencheur d'un compte à rebours et une identification d'une action prédéfinie de l'objet d'effet spécial.

3. Procédé de génération d'effet spécial selon la revendication 1, dans lequel la détermination de la relation d'occlusion entre l'objet d'effet spécial et les multiples couches sur la base des informations de pose 3D comprend :
la détermination d'une relation de chevauchement des multiples couches sur la base d'informations de profondeur de chacune des multiples couches ; et
la détermination de la relation d'occlusion entre l'objet d'effet spécial et les multiples couches conformément aux informations de pose 3D de multiples points caractéristiques de l'objet d'effet spécial et de la relation de chevauchement des multiples couches.

4. Procédé de génération d'effet spécial selon la revendication 1, dans lequel les multiples couches obtenues par segmentation comprennent une couche d'objet réel et le procédé comprend en outre, avant l'obtention des informations de pose 3D de l'objet d'effet spécial :
la détermination d'un objet réel dans la couche d'objet réel comme objet d'effet spécial.

5. Procédé de génération d'effet spécial selon la revendication 1, dans lequel, en réponse à l'objet d'effet spécial étant un objet réel dans l'image à traiter, l'obtention des informations de pose 3D de l'objet d'effet spécial comprend :
l'estimation d'informations de squelette 3D de l'objet d'effet spécial et la détermination des informations de pose 3D de l'objet d'effet spécial conformément aux informations du squelette 3D estimées (S820).

6. Procédé de génération d'effet spécial selon la revendication 1, dans lequel en réponse à l'image à traiter étant une image capturée en temps réel, le remplissage de la région répondant à la condition dans chacune des multiples couches comprend :
en réponse à l'image capturée en temps réel étant capturée avec une position de caméra fixe, le remplissage de la région répondant à la condition dans chacune des multiples couches sur la base de pixels dans une région correspondant à la région répondant à la condition dans chacune des multiples couches d'une image de trame précédente ; et
en réponse à l'image capturée en temps réel étant capturée avec une position de caméra mobile, le remplissage de la région répondant à la condition dans chacune des multiples couches par un algorithme de remplissage d'image prédéfini.

7. Procédé de génération d'effet spécial selon la revendication 1, dans lequel le rendu de l'objet d'effet spécial comprend :
le rendu de l'objet d'effet spécial avec un changement de taille de l'objet d'effet spécial.

8. Procédé de génération d'effet spécial selon l'une quelconque des revendications 1 à 7, dans lequel les multiples couches comprennent une couche de premier plan, une couche d'arrière-plan et une couche plane, et la relation d'occlusion comprend une relation d'occlusion entre la couche de premier plan et l'objet d'effet spécial, dans un cas où l'objet d'effet spécial est un objet virtuel, une surface prédéfinie de l'objet d'effet spécial est ajustée à la couche plane.

9. Appareil de génération d'effet spécial, comprenant :
un module de segmentation (910) configuré pour segmenter une image à traiter pour obtenir de multiples couches, en réponse à une instruction d'effet spécial ;
un module de détermination de relation d'occlusion (920) configuré pour obtenir des informations de pose tridimensionnelle (3D) d'un objet d'effet spécial et déterminer une relation d'occlusion entre l'objet d'effet spécial et les multiples couches sur la base des informations de pose 3D, dans lequel l'objet d'effet spécial est un objet virtuel généré par la construction d'un modèle 3D ou un objet réel correspondant à une couche de l'image à traiter, pour un objet réel, une commande de sélection pour sélectionner un objet d'effet spécial à partir d'une couche est définie dans une interface, en activant la commande de sélection de la couche, la couche est sélectionnée comme couche d'objet réel, et un objet réel identifié à partir de la couche est utilisé comme objet d'effet spécial, pour chaque type d'objet virtuel, une commande de sélection d'un effet spécial correspondant au type d'objet virtuel est prévue dans l'interface, et différents objets virtuels sont obtenus comme objet d'effet spécial en actionnant différentes commandes de sélection ;
un module de rendu (930) configuré pour le rendu de l'objet d'effet spécial ou des multiples couches conformément à la relation d'occlusion pour générer une image d'effet spécial, comprenant : en réponse à l'objet d'effet spécial étant un objet virtuel, l'identification d'une position 3D d'une couche plane parmi les multiples couches, l'ajustement d'une surface prédéfinie de l'objet d'effet spécial à la couche plane conformément à la position 3D de la couche plane et des informations de pose 3D de l'objet d'effet spécial, et la superposition et le rendu d'une région de l'objet d'effet spécial qui n'est pas occluse par les multiples couches sur une couche correspondant à la région ; en réponse à l'objet spécial étant un objet réel dans l'image à traiter, le remplissage de pixels d'une région répondant à une condition dans chacune des multiples couches, dans lequel la région répondant à la condition comprend une région occluse par une partie de l'objet d'effet spécial ou l'objet d'effet spécial entier dans l'image à traiter, et l'occultation de la partie de l'objet d'effet spécial ou de l'objet d'effet spécial entier dans la relation d'occlusion.

10. Dispositif électronique, comprenant :
au moins un processeur ;
un dispositif de stockage pour stocker au moins un programme qui, lorsqu'il est exécuté par au moins un processeur, amène l'au moins un processeur à mettre en œuvre le procédé de génération d'effet spécial selon l'une quelconque des revendications 1 à 9.

11. Support de stockage lisible par ordinateur contenant des instructions exécutables par ordinateur qui, lorsqu'elles sont exécutées par un processeur, amènent le processeur à exécuter le procédé de génération d'effet spécial selon l'une quelconque des revendications 1 à 9.
